# EUROPEAN PATENT APPLICATION

(11) **EP 2 711 846 A1**
(43) Date of publication of application: **26.03.2014**
(21) Application number: 12861183.7
(22) Date of filing: 31.12.2012
(51) Int. Cl.: G06F 17/21

(54) **METHOD AND DEVICE FOR PROCESSING TEMPLATE FILE**

(30) Priority: 31.12.2011 CN 201110461688
(71) Applicant: Peking University Founder Group Co., Ltd, Haidian District Beijing 100871 (CN); Beijing Founder Electronics Co., Ltd., Haidian District, Beijing 100085 (CN)
(72) Inventor: TANG, Yu, Beijing 100871 (CN)
(74) Representative: Michalski Hüttermann & Partner Patentanwälte
(86) International application number: PCT/CN2012/087998
(87) International publication number: WO 2013/097799

(57) **Abstract**

The application provides method and apparatus for processing a fixed layout file. The apparatus for processing the fixed layout file comprises: an XML file generating module configured to generate an XML file, wherein the XML file includes parameters of a dynamic interactive object; and a data setting module configured to set an action for opening the XML file in a description of the fixed layout file, to display effects and behaviors of the dynamic interactive object after the XML file is opened by triggering the action. In an embodiment of the present application, the apparatus for processing the fixed layout file further comprises a data presenting module which is configured to trigger the action to open the XML file when the fixed layout file is opened by the reader, to obtain the dynamic interactive object so that the effects and behaviors of the dynamic interactive object are presented in the reader.

## Description

### Cross Reference to Related Applications

The present application claims priority of Chinese Patent Application No. 201110461688.X filed on December 31, 2011. The contents of the application are incorporated herein by reference in their entirety.

### Technical Field

The present application relates to a field of digital typesetting technology, in particular, to a method and an apparatus for processing a fixed layout file.

### Background

In a type of fixed layout file, files with various formats are transformed in a uniform format, while the layout and the information such as texts, charts, formulas and colors of the original files are maintained during the transformation, so as to make the display results consistent in different terminal devices and reading software. The fixed-layout file is described in a static and absolute way, wherein locations where each element (such as characters, pictures, tables etc.) displays and its size are explicitly recorded in a defined coordinate system. Therefore, the printed results for a fixed-layout file and the browsing results in the computer are consistent. In addition, there is a consistent presentation in any environment (operating systems of terminals, such as a desktop computer, a notebook, a tablet computer, an intelligent mobile phone), to ensure the original files are accurately presented.

Contents of the fixed layout file only may be presented statically due to its characteristics. The fixed layout file supports limitedly some interactive functions of multimedia, such as playing audio or video files. However, for more complex dynamic interactive capabilities, such as roaming in a virtual reality scene and gaming, it is very difficult to make a complete and detailed definition for interactive effects in the fixed layout files due to a number of factors, such as complexities of interactive contents, uncertainty of interactive behaviors, diversity of interactive platforms, expansibility of interactive functions and so on.

With the advent of the era of mobile Internet - the fourth IT wave, the rise up of new media brings forward higher requirements to the presentation of the traditional fixed layout files in personalized contents, instantaneity of information retrievals and entertaining of reading experience and so on. However, these requirements cannot be met by the format of the existing fixed layout files.

### Summary

According to one aspect of the present application, a method for processing a fixed layout file is provided. The method comprises generating an XML file with parameters of a dynamic interactive object; and setting an action for opening the XML file in a description of the fixed layout file, to make effects and behaviors of the dynamic interactive object presented after the XML file is opened by triggering the action.

According to another aspect of the present application, an apparatus for processing a fixed layout file is provided. The apparatus comprises an XML file generating module configured to generate an XML file with parameters of a dynamic interactive object; and a data setting module configured to set an action for opening the XML file in a description of the fixed layout file, to display effects and behaviors of the dynamic interactive object after the XML file is opened by triggering the action.

Alternatively, the above apparatus for processing the fixed layout file further comprises a data presenting module which is configured to trigger the action to open the XML file when the fixed layout file is opened by the reader, to obtain the dynamic interactive object so that the effects and behaviors of the dynamic interactive object are presented in the reader.

According to another aspect of the present application, a computer readable storage medium is provided. The medium stores therein instructions for generating an XML file with parameters of a dynamic interactive object; and instructions for setting an action for opening the XML file in a description of the fixed layout file, to display effects and behaviors of the dynamic interactive object after the XML file is opened by triggering the action.

Alternatively, the medium further stores therein instructions for triggering the action to open the XML file when the fixed layout file opened by the reader, to obtain the dynamic interactive object so that the effects and behaviors of the dynamic interactive object are presented in the reader.

From the method and the apparatus for processing the fixed layout file according to the present application, an problem of static presentation of fixed layout files in the prior art can be addressed by describing the dynamic interactive object in the XML, so that effects of dynamic presentation are achieved in the fixed layout files.

### Brief Description of the Drawing

The drawings described herein are used to provide a further understanding to the present application and constitute a part of this specification. Exemplary embodiments of the present application and their descriptions serve to explain the present application and do not constitute improper limitation on the present application. In the drawings:
Fig. 1 is a block diagram illustrating an apparatus for processing a fixed layout file according to an embodiment of the present application.
Fig. 2 is a flowchart illustrating a method for processing a fixed layout file according to an embodiment of the present application.
Fig. 3 is a flowchart illustrating a method for processing a fixed layout file according to another embodiment of the present application.

### Detailed Description

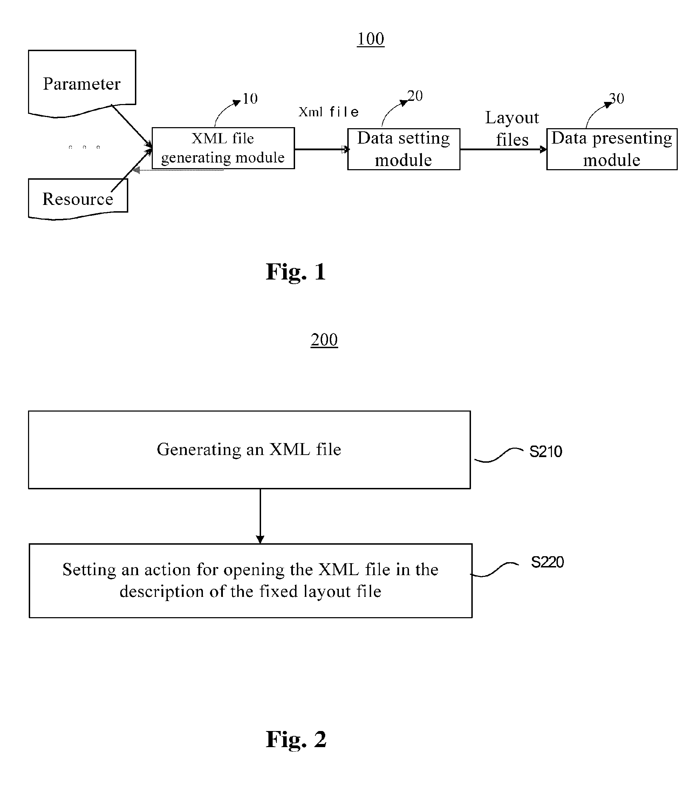

Fig. 1 is a block diagram illustrating an apparatus 100 for processing a fixed layout file according to an embodiment of the present application. As shown in Fig. 1, the apparatus 100 includes an XML file generating module 10 and a data setting module 20. The XML file generating module 10 is configured to generate an XML file with parameters of dynamic interactive objects. The dynamic interactive objects may include at lease one of audio, video, image, three-dimensional data files and application programs. In addition, the parameters of the dynamic interactive objects include a layout location, a layout size, and an interactive behavior definition to be set for these objects. In the XML file, these parameters may be described and the dynamic interactive object may be referred to. This will be further described hereafter.

The data setting module 20 is configured to, in the description of the fixed layout file, set an action for opening the XML file , so as to display effects and behaviors of the dynamic interactive objects after the XML file is opened by triggering the action. That is, presenting of dynamic effects in the fixed layout file is achieved.

Alternatively, as shown in Fig. 1, the apparatus 100 for processing the fixed layout file may further include a data presenting module 30. The data presenting module 30 is configured to trigger the set action to open the XML file when the fixed layout file is opened (such as in a reader), so as to obtain the dynamic interactive objects referred in the XML file, so that the effects and behaviors of the dynamic interactive objects may be displayed (such as in an application layer in the reader).

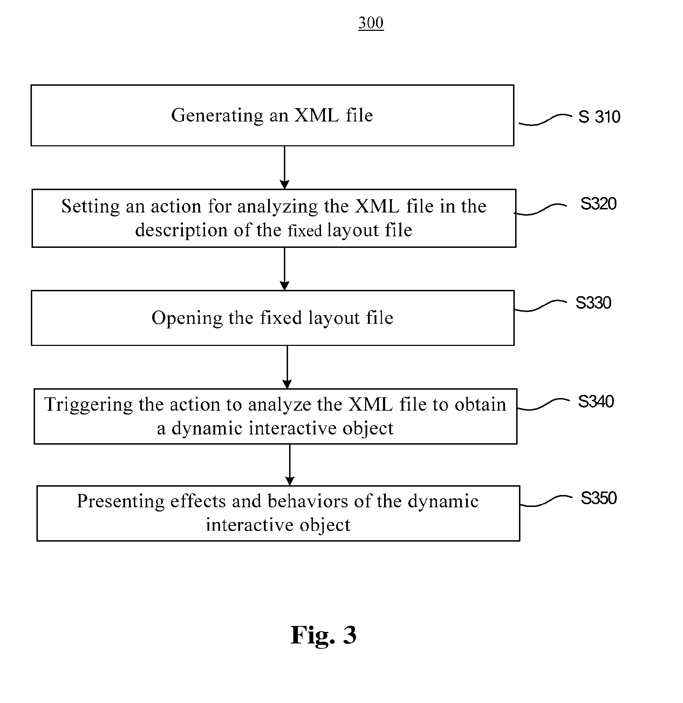

Hereinafter, methods 200 and 300 for processing a fixed layout file according to another aspect of the present application will be explained with reference to Figs. 2 and 3. From the description of methods 200 and 300, the skilled in the art can further understand specific cooperation relationships among the modules 10-30.

Fig. 2 illustrates the method 200 for processing the fixed layout file according to an embodiment of the present application. The method 200 begins with a step S210. In step S210, the XML file generating module 10 generates an XML file. As mentioned above, the generated XML file includes sources used for the dynamic interactive objects and parameters of the dynamic interactive objects. The XML file may be generated by the typesetting technology in the prior art. For example, in a fixed page range, objects with various types, such as words, tables, graphics and images are placed in order to achieve the best aesthetic presentation effect, thereby arresting or bringing comfortable reading experiences.

Then, in step S220, the data setting module 20 sets an action for opening the XML file in the description of the fixed layout file to display effects and behaviors of the dynamic interactive objects after the XML file is opened by triggering the action. By XML description in the fixed layout files, instead of static effects of traditional fixed layout files, there is almost unlimited scalability in presenting the contents, and any new interaction modes can be quickly and easily embedded into the fixed layout file. At the same time, a two-way communication channel is set up between a reader and the media, and reading experiences for the reader has also been greatly improved. Different from static page objects contained in the traditional typesetting, the reader can interact with contents presented by the layout through the interactive objects to expand reading dimensions and improve the reading experiences. In order to present these resources in the layout, it is required to set correct parameters, including a layout location, a layout size, and an interactive behavior definition and so on. Preferably, these parameters may be described and the dynamic interactive objects may be referred to in the XML file. The XML file is a simple data storage language and describes data by using a series of simple tags. These tags may be set up in a convenient way so as to facilitate understanding and usage in different applications and in different platforms.

Setting events for triggering the actions, such as some reading behavior, turning to a layout where the XML file locates or clicking a region associated with the XML file in the layout, may be invoked by the reader. The reader is an interpreter for a fixed layout file which can analyze an XML configuration file of the interactive object. Effects and behavior of the defined interactive objects can be realized in the level of the application layer by this kind of reader according to types of the system platform. Realization modes of different system platform are different, but the finally realized effects obtained through by the XML description should be the same.

Preferably, referring to Fig. 3, the method 300 for processing the fixed layout file according to another embodiment of the present application is shown. In the method 300, steps S310 and S320 are similar to the above steps S210 and S220 and thus descriptions thereof are omitted. In step S330, the data presenting module 30 opens the fixed layout file, for example in the reader. In step S340, the data presenting module 30 triggers an action to open the XML file to obtain the dynamic interactive objects. Then, in step S350, effects and behaviors of the dynamic interactive objects are presented in the reader (for example in the application layer of the reader).

In the format definition of the fixed layout file, there is a description of an action (Action) structure. The Action is triggered by an event (Event), and Event refers to behaviors generated by the readers in reading the fixed layout file, such as opening or closing a page, or clicking a certain region on the page. At the same time, execution of the Event is effective in a specific region, named as a hot zone (Region). The Events are generated in the hot zone so that action of triggering may be divided into many kinds of actions, one is a Uniform Resource Identifier (URI) which is a string used to uniquely identify a resource, wherein the string describing a network path or local path of the resource. The path address of the above-mentioned XML file is recorded as an URI action in the fixed layout file to establish an association between the fixed layout file and the interactive objects.

Hot zone may cover the entire page, and also may be a region on the page. The interactive object corresponding to the former is referred to as an interaction object with page level. The trigger event of the kind of interactive object is "opening the page" and the presented position of the interactive object in the page should be specified when typesetting. The interactive object corresponding to the latter refers to an interaction object with component level. This kind of interactive objects is generally triggered by "clicking a certain region in the page by the user" and the interactive objects are presented by popping-up without locating in the page.

There are many types of dynamic interactive objects, and corresponding parameter setting and resources are not the same. In a preferred embodiment of the present application, some rules for the placement of the interactive objects on the layout have been set. The XML file description of the interactive objects is divided into two parts: a public setting and a private setting.

The public setting mainly includes attributes of the interactive objects, associated information of the typesetting and appearance settings of the interactive objects. For example, the type of objects, ID, location, size of the location in the layout, background color, background image or background transparency of the objects, type, width and color of frame of the objects. The private setting is different based on different types of the interactive objects. It is noted that, 1) if the parameter setting relates to the reference of the object resources, a relative path is used for referring to path while avoiding the presentation of an absolute path, and 2) when there are a plurality of parameter sets with similar structures, the XML description of array (Array) + Dictionary (Dictionary) may be used to facilitate obtaining parameter information quickly and easily when analyzing the interactive objects by the reader.

Hereafter, the XML format is explained by an example of panoramic browsing the interactive object. The resource of the panorama includes six images, which correspond to pictures of browsing a scene from six orientations: front, right, back, left, up, down. The user can focus in the center of the scene and change viewing angles by interactions so as to obtain a full range for the observation of the scene. The XML file description of the example is as below.

```
 <?xml version="1.0" encoding="UTF-8"?>
 <dict>
       <key>Function_Type</key>
       <string>PANOR</string>
       <key>ID</key>
       <string> 1 </string>
       <key>Bound_Box</key>
       <string>0.0 0.0 768.0 1024.0</string>
       <key>Image_List</key>
       <array>
            <dict>
                <key>Image_Direction</key>
                <string>FRONT</string>
                <key>Image_Loc</key>
                <string>PluginRes/Panor01/01.jpg</string>
                </dict>
                <dict>
                <key>Image_Direction</key>
                <string>LEFT</string>
                <key>Image_Loc</key>
                <string>PluginRes/Panor01/02.jpg</string>
                </dict>
                <dict>
                <key>Image_Direction</key>
                <string>BACK</string>
                <key>Image_Loc</key>
                <string>PluginRes/Panor01/03.jpg</string>
                </dict>
                <dict>
                <key>Image_Direction</key>
                <string>RIGHT</string>
                <key>Image_Loc</key>
                <string>PluginRes/Panor01/04.jpg</string>
                </dict>
                <dict>
                <key>Image_Direction</key>
                <string>TOP</string>
                <key>Image_Loc</key>
                <string>PluginRes/Panor01/05.jpg</string>
                </dict>
                <dict>
                <key>Image_Direction</key>
                <string>BOTTOM</string>
                <key>Image_Loc</key>
                <string>PluginRes/Panor01/06.jpg</string>
                </dict>
                </array>
                </dict>
```

Texts in <key> and </key> are keywords. In the parsing process, the corresponding contents are searched for according to the keywords. Function_Type, ID and Bound_Box are public settings, and the remaining parameters are private settings. Two attributes, an orientation Identification and an image path, are required to describe the images in each orientation. Therefore, a dictionary of <dict></dict> is organized by the image parameters in each orientation, and then, the six orientation images are placed into an array description, i.e., between <array> and </array> to be eventually indexed according to the private setting Image_List. This is just a simple description, and the users may also add more parameters for describing if desired.

When interpreting the fixed layout file processed by the above methods, the reader may locate to the XML file of the interactive objects by the URI, and then obtain configuration parameters and resource paths of the objects from the located file so as to achieve a final effect of objects in the application layer of the platform according to these settings.

The disclosed and functional operations described in the other embodiments and the specification can be implemented by digital circuits or computer software, firmware or hardware comprising structures and their equivalent disclosed in the specification, or by a combination of one or more of their implementation. The disclosed and other embodiments can be implemented as one or more computer program products, that is, one or more modules executed by computer programs encoded in a computer readable medium, so that operation thereof can be performed or controlled by a data processing device. The computer readable medium can be machine readable storage equipments, machine readable storage substrates, memory devices, synthetic materials affecting machine readable signal propagation or one or more combination thereof. The term "data processing device" contains all devices, equipments and machines for processing data, for example, includes a programmable processor, a computer, a plurality of processor or computer. Except to the hardware, the device may include codes constructing an execution environment of a computer program, for example, codes constructing a processor firmware, a protocol branch, a database management system and an operating system or one or more of their combination. Propagation signals are generated artificially, such as electrical, optical or electromagnetic signals generated by a machine, which are generated to encode the information to be transmitted to a suitable receiver device.

A computer program (also referred to as a program, software, application software, script or code) can be written in any form of language including compiled or interpreted languages, and it can be deployed in any form including an independent program or a module, component, or other units used in subroutine in a computing environment. It is not necessary that a computer program corresponds to a file in a file system. The program may be stored in the part of the file that stores other programs or data (for example, one or multiple scripts stored in a markup language document), in a single document dedicated to the discussed procedure, or in a plurality of cooperative files (for example, files storing one or more modules, subroutines or codes). The computer program can be deployed to execute in a computer or in a plurality of computers which are located in one place or distributed in multiple places and interconnected by a communication network.

It is understood that, the above embodiments are exemplary only to illustrate the principle of the present application, but is not limited to this. For the skilled in the art, various modifications and variations can be made to the present application without departing from the spirit and essence of the present application, and all kinds of modifications and variations can also be considered be included within the scope of protection of the application.

## Claims

1. A method for processing a fixed layout file, comprising:
generating an XML file with parameters of a dynamic interactive object; and
setting an action for opening the XML file in a description of the fixed layout file, so as to make effects and behaviors of the dynamic interactive object presented after the XML file is opened by triggering the action.

2. The method according to claim 1, wherein the dynamic interactive object comprises at least one of an audio file, a video file, an image file and a three-dimensional data file; and the parameters comprise at least one of a layout location, a layout size and an interactive behavior definition of the dynamic interactive object.

3. The method according to claim 1, wherein the step of generating comprises:
describing the parameters in the XML file; and
configuring the described parameters to refer to the dynamic interactive object.

4. The method according to claim 1, further comprising a step of setting an event for triggering the action.

5. The method according to any one of claims 1-4, further comprising:
opening the fixed layout file by a reader;
triggering the action to open the XML file to obtain the dynamic interactive object; and
presenting the effects and behaviors of the dynamic interactive object in the reader according to the parameters of the dynamic interactive object.

6. An apparatus for processing a fixed layout file, comprising:
an XML file generating module configured to generate an XML file with parameters of a dynamic interactive object; and
a data setting module configured to set an action for opening the XML file in a description of the fixed layout file, so as to make effects and behaviors of the dynamic interactive object presented after the XML file is opened by triggering the action.

7. The apparatus according to claim 6, wherein the dynamic interactive object comprises at least one of an audio file, a video file, an image file and a three-dimensional data file; and the parameters comprise at least one of the layout location, size and interactive behavior definition of the dynamic interactive objects.

8. The apparatus according to claim 6, wherein the XML file generating module is configured to describe the parameters in the XML file and configure the parameters to refer to the dynamic interactive object.

9. The apparatus according to claim 6, wherein the data setting module is configured to set an event for triggering the action.

10. The apparatus according to claim 9, further comprising:
a data presenting module configured to trigger the action to open the XML file when the fixed layout file is opened by the reader, to obtain the dynamic interactive object so as to present the effects and behaviors of the dynamic interactive object are in the reader.
